# EUROPÄISCHE PATENTSCHRIFT

(11) **EP 3 852 072 B1**
(45) Veröffentlichungstag und Bekanntmachung des Hinweises auf die Patenterteilung: **15.11.2023**
(21) Anmeldenummer: 20152693.6
(22) Anmeldetag: 20.01.2020
(51) Int. Cl.: G07C 9/22, G07C 9/15

(54) **VERFAHREN ZUR ZUGANGSKONTROLLE FÜR PERSONEN UND FAHRZEUGE UND SYSTEM ZUR DURCHFÜHRUNG DES VERFAHRENS**
ACCESS CONTROL METHOD FOR PERSONS AND VEHICLES AND SYSTEM FOR CARRYING OUT THE METHOD
PROCÉDÉ DE CONTRÔLE D'ACCÈS POUR PERSONNES ET VÉHICULES ET SYSTÈME DE MISE EN UVRE DU PROCÉDÉ

(43) Veröffentlichungstag der Anmeldung: 21.07.2021
(73) Patentinhaber: Skidata GmbH, 5083 Grödig/Salzburg (AT)
(72) Erfinder: Lechner, Walter, 5083 Grödig/Salzburg (AT); Haslinger, Martin, 5083 Grödig/Salzburg (AT); Dr. Surkau, Reinhard, 5083 Grödig/Salzburg (AT); Dr. Haidacher, Martin, 5083 Grödig/Salzburg (AT)
(74) Vertreter: Karakatsanis, Georgios

(56) Entgegenhaltungen:
- EP-A1- 3 131 065
- EP-A1- 3 343 474
- EP-A2- 2 991 041
- WO-A1-2019/069257
- KR-A- 20170 020 173
- US-A1- 2018 146 336

## Beschreibung

Die vorliegende Erfindung bezieht sich auf ein Verfahren zur Zugangskontrolle für Personen und Fahrzeuge gemäß dem Oberbegriff des Patentanspruchs 1. Ferner bezieht sich die Erfindung auf ein System zur Durchführung des erfindungsgemäßen Verfahrens.

Aus dem Stand der Technik sind Verfahren und Systeme zur Zugangskontrolle für Personen oder Fahrzeuge bekannt. Hierbei ist in der Regel vorgesehen, eine Zugangskontrolle mittels des berührungslosen Auslesens von Zugangsberechtigungen durchzuführen, wobei Zugangskontrollvorrichtungen vorgesehen sind, die Mittel zum Erfassen und Auswerten der Zugangsberechtigungen sowie mechanische oder sonstig ausgeführte Sperrorgane aufweisen, die nach Vorliegen einer gültigen Zugangsberechtigung automatisch oder manuell von einer Sperrstellung in eine Freistellung überführt werden. Ferner sind Zugangskontrollvorrichtungen bekannt, welche ohne Sperrorgane ausgeführt sind.

Aus der WO 2019/069257 A1 geht ein Verfahren zur Identifizierung und/oder Authentifizierung eines Benutzers eines mobilen Geräts in einem Bereich hervor, im Rahmen dessen ein Beacon ein erstes drahtloses Signal an das mobile Gerät sendet, wobei das mobile Gerät eine eindeutige Kennung in dem ersten drahtlosen Signal erkennt und als Reaktion auf das erste drahtlose Signal eine Anwendung startet, wobei das mobile Gerät gleichzeitig ein zweites drahtloses Signal an eine Vielzahl von Empfängern sendet. Hierbei bestimmt ein Gateway den Standort des mobilen Geräts basierend auf Unterschieden in den von den Empfängern empfangenen Signalen, wobei ein Autorisierungszugang gewährt wird, welcher von dem Standort abhängig ist.

Aus der EP 3 131 065 A2 der Anmelderin ist ein Verfahren zur Zugangskontrolle bekannt, im Rahmen dessen die Überprüfung einer Zugangsberechtigung anhand der Auswertung einer von einem einer Zugangskontrollvorrichtung in Zugangsrichtung am nächsten befindlichen mobilen elektronischen Gerät oder einem einer Zugangskontrollvorrichtung am nächsten befindliche Datenträger über den Bluetooth Low Energy-Standard im Rahmen eines "Broadcasting" in regelmäßigen Abständen gesendeten ID, der zumindest eine Zugangsberechtigung eindeutig zugeordnet ist, erfolgt. Die ID wird von mit einem Computer umfassend eine CPU und Speichermittel verbundenen BLE Sende-Empfangseinheiten in Reichweite des mobilen elektronischen Gerätes oder des Datenträgers empfangen, wobei die Lokalisierung der mobilen elektronischen Geräte oder der Datenträger mittels der Auswertung des Received Signal Strength Indikators (RSSI) durchgeführt wird.

Ferner geht aus der EP 2 991 041 A1 ein sicheres kurzstreckenbasiertes Kommunikations- und Zugangskontrollsystem hervor, welches den Zugang zu einem gesperrten Bereich steuert, basierend auf einer Laufzeitkennung für mobile Geräte und Schlüssel, die orts-, geräte- und zeitspezifisch sein können, welche für die sichere Kommunikation zwischen mobilen Geräten und Zonencomputern erzeugt und verwendet werden. Hierbei können die Zonencomputer Benutzer über ihre mobilen Geräte validieren, um den Zugriff auf den gesperrten Bereich zu erlauben oder zu verweigern.

Aus der US/2018/146336 A1 ist ein Trackingsystem zum Tracken eines Beacons und eines im Beacon enthaltenen Berechtigungsnachweises bekannt, wobei das Beacon mit Leseeinrichtungen eines Zugangskontrollsystems unter Verwendung eines ersten Kommunikationsprotokolls kommunizieren kann, wobei der Berechtigungsnachweis mit Leseeinrichtungen des Zutrittskontrollsystems unter Verwendung eines zweiten Zugangskontrollsystems kommunizieren kann und wobei das Tracking des Beacons das Tracking des Berechtigungsnachweises ermöglicht und umgekehrt.

Ferner geht aus der EP 3 343 474 A1 der Anmelderin ein Verfahren zur Ausnutzung der Kapazität von Einrichtungen in einem Skigebiet, einer Messe, einem Freizeitpark oder in einem Stadion hervor, im Rahmen dessen die aktuelle Position und das Bewegungsprofil sämtlicher im Bereich des Skigebiets, der Messe, des Freizeitparks oder des Stadions anwesenden Personen erfasst werden, wobei auf einem Server eine People-Map erstellt wird, welche der räumlichen Verteilung der Personen entspricht, wobei durch die räumliche Verteilung der Personen als Funktion der Zeit ein Bewegungsprofil der Personen erstellt wird, wobei in Abhängigkeit der aktuellen Position der anwesenden Personen, des Bewegungsprofils der anwesenden Personen und der aktuellen Auslastung der Einrichtungen, alle oder einzelne Personen vom Server generierte Informationen erhalten, welche eine Redirektion dieser Personen bewirken können, wodurch die Ausnutzung der Kapazität der Einrichtungen optimiert werden kann.

Zum berührungslosen Auslesen von Zugangsberechtigungen können nach dem Stand der Technik unterschiedliche Standards zur berührungslosen Kommunikation, wie beispielsweise WLAN, BLE (Bluetooth Low Energy), RFID, NFC verwendet werden, wobei zu diesem Zweck die Zugangskontrollvorrichtungen zumindest eine Leseeinrichtung bzw. Antenneneinheit aufweisen, welche Signale eines Datenträgers enthaltend eine Zugangsberechtigung oder eine ID, der eine Zugangsberechtigung zugeordnet ist, empfangen.

Einige dieser Standards, wie beispielweise NFC oder das berührungslose Auslesen der Zugangsberechtigungen mittels Barcode-Scanner weisen eine sehr geringe Reichweite auf, so dass in nachteiliger Weise keine "hands-free" - sondern eine "touch and go" -Funktionalität zur Verfügung gestellt wird.

Bei Standards, die eine größere Reichweite aufweisen und somit die gewünschte "hands-free" Funktionalität zur Verfügung stellen, besteht die Notwendigkeit, die Reichweite der Leseeinrichtungen bzw. Antennen derart einzustellen, dass Datenträger nur in einem bestimmten Abstand in der richtigen Richtung erfasst werden, um Trennungs- und Kollisionsprobleme mit Datenträgern von in der Schlange stehenden Personen oder Fahrzeugen zu vermeiden. Ferner besteht die Notwendigkeit einer zuverlässigen Fahrbahn- bzw. Zugangstrennung im Fall eines mehrspurigen Zugangs.

Zudem soll berücksichtigt werden, dass sich als Datenträger dienende Mobiltelefone in Abhängigkeit der Antennenanordnung und der Stärke bzw. Auslegung der eingebauten Hardware hinsichtlich der Emittierung von Signalen unterschiedlich verhalten.

Der vorliegenden Erfindung liegt die Aufgabe zugrunde, ein Verfahren zur Zugangskontrolle bei einem Zugangskontrollsystem für Personen oder Fahrzeuge umfassend zumindest eine Zugangskontrollvorrichtung anzugeben, im Rahmen dessen die Überprüfung einer Zugangsberechtigung anhand der Auswertung einer von einem Datenträger über einen Standard zur drahtlosen Kommunikation an eine Zugangskontrollvorrichtung gesendeten ID, der zumindest eine Zugangsberechtigung eindeutig zugeordnet ist, erfolgt, durch dessen Durchführung die Zugangskontrolle vereinfacht wird.

Insbesondere soll eine "hands-free" Zugangskontrolle ermöglicht werden, wobei Trennungs- und Kollisionsprobleme mit Datenträgern von in der Schlange stehenden Personen oder Fahrzeugen vermieden werden und eine zuverlässige Fahrbahn- bzw. Zugangstrennung im Fall eines mehrspurigen Zugangs gewährleistet wird. Insbesondere soll der einer Zugangskontrollvorrichtung in Zugangsrichtung am nächsten befindliche Datenträger ermittelt werden, um anschließend die von diesem Datenträger gesendete ID, der zumindest eine Zugangsberechtigung eindeutig zugeordnet ist, auszuwerten und bei gültiger Zugangsberechtigung Zugang zu gewähren.

Ferner soll ein System zur Durchführung des erfindungsgemäßen Verfahrens angeben werden.

Diese Aufgabe wird für ein Verfahren durch die Merkmale des Patentanspruchs 1 gelöst. Weitere erfindungsgemäße Ausgestaltungen und Vorteile gehen aus den Unteransprüchen hervor. Ein System zur Durchführung des erfindungsgemäßen Verfahrens ist Gegenstand des Patentanspruchs 14.

Demnach wird ein Verfahren zur Zugangskontrolle bei einem Zugangskontrollsystem für Personen oder Fahrzeuge umfassend zumindest eine Zugangskontrollvorrichtung vorgeschlagen, wobei jede Zugangskontrollvorrichtung jeweils zumindest eine Antenne aufweist, wobei die Überprüfung einer Zugangsberechtigung anhand der Auswertung zumindest eines von einem Datenträger über einen ersten Standard zur drahtlosen Kommunikation in einem Advertising Modus in regelmäßigen Abständen an eine Zugangskontrollvorrichtung gesendeten Beacons erfolgt, welches eine ID, der zumindest eine Zugangsberechtigung eindeutig zugeordnet ist und eine eindeutige Kennung des Datenträgers enthält.

Gemäß der Erfindung enthalten die von den Datenträgern gesendeten Beacons zusätzlich jeweils eine für den jeweiligen den Beacon sendenden Datenträger eindeutige Beacon-ID, wobei durch die Kombination aus der eindeutigen Kennung des Datenträgers und der für den Datenträger eindeutigen Beacon-ID eine eindeutige Identifikation eines jeden übertragenen Beacons von jedem Datenträger ermöglicht wird. Gemäß einer Variante der Erfindung ist die Beacon-ID für den jeweiligen den Beacon sendenden Datenträger und für ein vorgegebenes Zeitintervall, beispielsweise für eine vorgegebene Minuten- oder Stundenanzahl ab Beginn des Sendeprozesses eindeutig, so dass durch die Kombination aus der eindeutigen Kennung des Datenträgers und der Beacon-ID eine eindeutige Identifikation eines jeden innerhalb des vorgegebenen Zeitintervalls übertragenen Beacons von jedem Datenträger ermöglicht wird. Gemäß einer Weiterbildung kann das vorgegebene Zeitintervall in Abhängigkeit des jeweiligen Zugangskontrollsystems beispielsweise bei einem Zugangskontrollsystem für Fahrzeuge der durchschnittlichen zur Zugangskontrolle benötigten Zeit oder für den Fall eines Skigebietes der maximalen Aufenthaltsdauer in dem Skigebiet plus jeweils einem vorzugsweise applizierbaren Offset entsprechen.

Die Identifizierung und Lokalisierung der Datenträger wird durch eine Auswertung der RSSIs (Received Signal Strength Indicator) der von den Datenträgern gesendeten

Beacons an der zumindest einen Antenne einer Zugangskontrollvorrichtung durchgeführt, wobei dadurch der einer Zugangskontrollvorrichtung in Zugangsrichtung am nächsten befindliche Datenträger ermittelt wird und die von diesem Datenträger gesendete ID, der zumindest eine Zugangsberechtigung eindeutig zugeordnet ist, ausgewertet wird, um bei gültiger Zugangsberechtigung Zugang zu gewähren. Durch die eindeutige Identifikation eines jeden übertragenen Beacons von jedem Datenträger durch die Kombination aus der eindeutigen Kennung des Datenträgers und der für den Datenträger eindeutigen Beacon-ID wird gewährleistet, dass im Rahmen der RSSI- Auswertung die RSSI-Werte jeweils desselben Beacons eines Datenträgers herangezogen werden.

Die Datenträger senden die Beacons in regelmäßigen Abständen von beispielsweise 120 ms +/- 20 %.

Die Zugangskontrollvorrichtungen sind vorzugsweise jeweils mit einem Server verbunden, wobei die RSSI-Auswertung und/oder die Auswertung der Gültigkeit einer Zugangsberechtigung im Server durchgeführt werden kann. Alternativ kann die RSSI-Auswertung und/oder die Auswertung der Gültigkeit einer Zugangsberechtigung in den jeweiligen Zugangskontrollvorrichtungen erfolgen.

Vorzugsweise sind die Datenträger als Mobiltelefone oder Smartwatches ausgeführt, wobei in diesem Fall die Verwendung der IMEI-Nummer als eindeutige Kennung des Datenträgers vorteilhaft ist; ferner können die Datenträger als separate Transmitter ausgeführt sein.

Der Sendeprozess der Beacons kann gemäß einer Ausgestaltung der Erfindung von einem Benutzer mittels einer auf dem Datenträger installierten App aktiviert werden, wobei der Benutzer die für das jeweilige Zugangskontrollsystem richtige bzw. gültige ID, der eine Zugangsberechtigung zugeordnet ist, auswählen kann.

Gemäß einer Weiterbildung der Erfindung können bei der RSSI-Auswertung Korrekturwerte verwendet werden, welche für jeden Datenträgertyp, beispielsweise für jedes Mobiltelefon-Model, unterschiedlich sein können, um die unterschiedlichen Sendeleistungen der Sendemodule des ersten Standards zur drahtlosen Kommunikation unterschiedlicher Datenträgertypen zu kompensieren. Auf diese Weise soll vermieden werden, dass ein Datenträger mit einer sehr hohen Sendeleistung als der einer Zugangskontrollvorrichtung in Zugangsrichtung am nächsten befindliche Datenträger ermittelt wird, obwohl sich ein weiterer Datenträger niedriger Sendeleistung näher an der Zugangskontrollvorrichtung befindet. Eine derartige Situation dürfte jedoch sehr selten auftreten, da die Antennen vorzugsweise in Zugangsrichtung unmittelbar vor dem jeweiligen Zugang angeordnet sind und diesen Bereich abdecken, so dass aufgrund der Abnahme der Strahlungsleistung pro Flächeneinheit im Wesentlichen mit dem Quadrat der Entfernung bei üblichen Sendeleistungsunterschieden, beispielsweise bei üblichen Sendeleistungsunterschieden bei Mobiltelefonen, der richtige Datenträger als der einer Zugangskontrollvorrichtung in Zugangsrichtung am nächsten befindliche Datenträger erkannt wird.

Hierbei kann der datenträgertypbezogene Korrekturwert mit den Beacons eines Datenträgers an die Zugangskontrollvorrichtung über die Antennen der Zugangskontrollvorrichtung übermittelt werden, wobei er in der Auswertung des Signals an der Empfängerseite berücksichtigt wird. Vorzugsweise wird dies durch eine auf den Datenträgern installierten App gesteuert.

Alternativ kann auf der Empfängerseite, nämlich in der Zugangskontrollvorrichtung oder in einem mit der jeweiligen Zugangskontrollvorrichtung verbundenen Server eine Lookup Tabelle abgelegt sein, welche die Korrekturwerte für unterschiedliche Datenträgertypen beinhaltet, wobei basierend auf der eindeutigen Kennung der Datenträger ein entsprechender Korrekturwert ausgewählt und zur RSSI-Auswertung herangezogen wird.

Der erste Standard zur drahtlosen Kommunikation kann beispielsweise ein BLE Standard, ein UWB (Ultra-Breitband-Technologie) Standard oder ein WLAN Standard sein.

Gemäß der Erfindung wird vorgeschlagen, dass wenn zusätzlicher Informationsfluss von der Zugangskontrollvorrichtung zum Datenträger benötigt wird, beispielsweise wenn der Nutzer über einer erfolgten Zutritt informiert werden soll, dieser, wenn der erste Standard ein BLE-Standard ist, nach einem weiteren Standard zur drahtlosen Kommunikation erfolgt, wodurch die Notwendigkeit einer Umschaltung des Datenträgers von einem Sende- zu einem Empfangsmodus für den BLE-Standard entfällt. Beispielsweise kann der weitere Standard ein WLAN oder ein LTE Standard sein.

Um den Energiebedarf der Datenträger zu optimieren und eine lange Batterielaufzeit der verwendeten Datenträger zu ermöglichen, wird im Rahmen einer Weiterbildung der Erfindung vorgeschlagen, den Sendeprozess der Beacons nach dem Geofencing-Prinzip auszulösen und zu unterbrechen. Beispielsweise kann die Sendefunktion der Datenträger in einem Advertising Modus aktiviert werden, wenn sich diese anhand der Auswertung eines GNSS (Global Navigation Satellite System)-Signals eines GNSS-Empfängers, beispielsweise eine GPS-Empfängers der Datenträger in einem vorgegebenen Bereich in der Nähe einer Zugangskontrollvorrichtung befinden.

Alternativ kann die Sendefunktion der Datenträger in einem Advertising Modus aktiviert werden, wenn sich diese in Reichweite eines von einer Zugangskontrollvorrichtung emittierten Aktivierungssignals nach einem zweiten Standard zur drahtlosen Kommunikation befinden und dieses empfangen, wobei die Sendefunktion deaktiviert wird, wenn sich der Datenträger außerhalb der Reichweite des Aktivierungssignals befindet.

Der zweite Standard zur drahtlosen Kommunikation kann dem ersten Standard zur drahtlosen Kommunikation entsprechen, wobei der erste Standard beispielsweise ein BLE Standard, ein UWB Standard oder ein WLAN Standard sein kann. Gemäß der Erfindung wird hierbei vorgeschlagen, dass wenn zusätzlicher Informationsfluss von der Zugangskontrollvorrichtung zum Datenträger benötigt wird, dieser nach einem weiteren Standard zur drahtlosen Kommunikation erfolgt, wodurch die Notwendigkeit einer Umschaltung des Datenträgers von einem Sende- zu einem Empfangsmodus für den BLE-Standard nach Empfang des Aktivierungssignals entfällt.

Die Aktivierung der Sendefunktion der Datenträger in einem Advertising Modus wird vorzugsweise durch eine auf dem Datenträger installierte App gesteuert.

Durch das Geofencing- Prinzip wird der Stromverbrauch der Datenträger so gering wie möglich gehalten, da die Sendefunktion aktiviert wird, wenn sie benötigt wird, nämlich dann, wenn sich ein Datenträger in der Nähe einer Zugangskontrollvorrichtung befindet, wodurch auszugehen ist, dass die Person, die den Datenträger bei sich trägt, den vom Zugangskontrollsystem abgedeckten Bereich betreten möchte.

Die Signalstärke des von einer Zugangskontrollvorrichtung emittierten Aktivierungssignals ist derart gewählt, dass unter Berücksichtigung der Empfangseigenschaften möglicher Datenträger deren Sendefunktion in einem vorgegebenen Abstandsintervall von der Zugangskontrollvorrichtung aus betrachtet aktiviert wird. Gemäß der Erfindung kann auch der Emissionswinkel des von einer Zugangskontrollvorrichtung emittierten Signals derart bestimmt sein, dass die Reichweite auch hinsichtlich des Winkels begrenzt ist, was beispielsweise im Falle eines mehrspurigen Zugangs besonders vorteilhaft ist.

Erfindungsgemäß enthält das Aktivierungssignal Informationen, die die Zugangskontrollvorrichtung, welche das Aktivierungssignal emittiert, eindeutig identifizieren, wie beispielsweise eine ID der Zugangskontrollvorrichtung und optional eine ID des Zugangskontrollsystems, wobei nach Empfang des Aktivierungssignals der Datenträger in einem Advertising Modus in regelmäßigen Abständen von beispielsweise 120 ms +/- 20% einen Beacon sendet, welcher die empfangenen Daten zur Identifizierung der das Aktivierungssignal emittierenden Zugangskontrollvorrichtung, eine ID, der zumindest eine Zugangsberechtigung eindeutig zugeordnet ist, eine eindeutige Kennung des Datenträgers und eine für den Datenträger eindeutige Beacon-ID enthält.

Mittels einer auf dem Datenträger installierten App kann die im Aktivierungssignal enthaltene Information, welche die Zugangskontrollvorrichtung, die das Aktivierungssignal emittiert eindeutig identifiziert oder für den Fall der Aktivierung des Sendeprozesses der Beacons anhand GNSS (Global Navigation Satellite System)-Signale die ermittelte Geolocation, dazu verwendet werden, automatisch aus einer möglichen Liste von IDs eine ID, der eine für die jeweilige Zugangskontrollvorrichtung bzw. das jeweilige Zugangskontrollsystem richtige bzw. gültige Zugangsberechtigung zugeordnet ist, auszuwählen und mittels der Beacons zu senden. Falls keine ID, der eine für die jeweilige Zugangskontrollvorrichtung bzw. das jeweilige Zugangskontrollsystem richtige bzw. gültige Zugangsberechtigung zugeordnet ist, vorhanden ist, werden vorzugsweise keine Beacons emittiert.

Die Funktionalitäten der im Rahmen der Beschreibung erwähnten Apps sind vorzugsweise in einer App enthalten.

Durch die Kombination aus der eindeutigen Kennung des Datenträgers und der für den Datenträger eindeutigen Beacon-ID wird eine eindeutige Identifikation eines jeden übertragenen Beacons von jedem Datenträger ermöglicht. Des Weiteren wird erfindungsgemäß die zeitliche Reihenfolge der Werte der Beacon-IDs der von einem Datenträger gesendeten Beacons nach einem vorgegebenen Muster bzw. nach einer vorgegebenen Funktion bestimmt.

Durch das erfindungsgemäß vorgeschlagene Senden von eindeutigen Beacons wird ein Klonen der Beacons und somit ein Missbrauch vermieden. Des Weiteren wird dadurch die Identifizierung der Datenträger optimiert und vereinfacht.

Erfindungsgemäß werden die Beacon-IDs mittels eines Algorithmus generiert, wobei der Algorithmus auch in der empfangenden Zugangskontrollvorrichtung bzw. im Zugangskontrollsystem gespeichert ist und zur Auswertung der Beacon-IDs herangezogen wird, wodurch ein Klonen der Beacons zusätzlich erschwert wird; ferner kann die Beacon-ID ein Zeitstempel enthaltend das aktuelle Datum sein.

Zum Empfangen der von den Datenträgern gesendeten Beacons weist die zumindest eine Zugangskontrollvorrichtung, der jeweils ein Zugang zugeordnet ist, zumindest eine Antenne auf, wobei die Nähe eines Datenträgers zu der zumindest einen Antenne d.h. die Identifizierung und Lokalisierung des Datenträgers durch eine Auswertung der RSSIs (Received Signal Strength Indicator) der Beacons der Datenträger in einem vorgegebenen Zeitintervall anhand der eindeutigen Kennung der Datenträgers und der Beacon-ID an der zumindest einen Antenne durchgeführt wird. Dies wird durch die eindeutige Identifikation eines jeden übertragenen Beacons von jedem Datenträger durch Auswertung die Kombination aus der eindeutigen Kennung des Datenträgers und der für den Datenträger eindeutigen Beacon-ID ermöglicht.

Durch die eindeutige Kennung der Datenträger können Beacons von verschiedenen Datenträgern voneinander unterschieden werden, wobei bei mehreren Antennen die Beacon-ID verwendet wird, um die Signalstärke eines Beacons eines Datenträgers an den verschiedenen Antennen miteinander vergleichen zu können.

Gemäß einer Ausgestaltung der Erfindung wird bei der Auswertung der empfangenen Signalstärken der Beacons der Datenträger geprüft, ob bei einer Zugangskontrollvorrichtung mit einer einzelnen Antenne mindestens zwei unterschiedliche Beacons eines Datenträgers in einem vorgegebenen Zeitintervall, das beispielsweise eine Sekunde betragen kann, eine höhere Signalstärke als ein vorgegebener Schwellenwert aufweisen, wobei, wenn dies der Fall ist, der Datenträger als der der Zugangskontrollvorrichtung in Zugangsrichtung am nächsten befindliche Datenträger erkannt wird.

Bei einer Zugangskontrollvorrichtung mit mehreren Antennen wird gemäß einer Ausgestaltung geprüft, ob mindestens zwei unterschiedliche Beacons eines Datenträgers in einem vorgegebenen Zeitintervall, das beispielsweise eine Sekunde betragen kann, jeweils an zumindest zwei Antennen eine höhere Signalstärke als ein vorgegebener Schwellenwert aufweisen, wobei, wenn dies der Fall ist, der Datenträger als der der Zugangskontrollvorrichtung in Zugangsrichtung am nächsten befindliche Datenträger erkannt wird. Alternativ wird geprüft, ob mindestens zwei unterschiedliche Beacons eines Datenträgers in einem vorgegebenen Zeitintervall jeweils an zumindest zwei Antennen eine höhere Signalstärke als ein vorgegebener erster Schwellenwert aufweisen oder an einer der Antennen mindestens zwei unterschiedliche Beacons eines Datenträgers in einem vorgegebenen Zeitintervall eine höhere Signalstärke als ein vorgegebener zweiter Schwellenwert aufweisen, wobei der zweite Schwellenwert höher als der erste Schwellenwert ist.

Die Zugangskontrollvorrichtungen können eine Antenne aufweisen, wenn eine definierte Position der Datenträger unmittelbar vor dem Zugang vorgesehen ist, beispielsweise wenn die Datenträger an einer vorgegebenen Stelle an Fahrzeugen angeordnet sind, wobei in diesem Fall die Antenne möglichst nah an den Datenträgern in Zugangsrichtung unmittelbar vor dem Zugang angeordnet sein soll.

Bei variabler Position der Datenträger, wie es bei Personen der Fall ist, die unterschiedlich groß sind und das Mobiltelefon beispielsweise in der Hosen- oder Brusttasche oder in einem Aktenkoffer tragen können, ist es vorteilhaft, den Bereich in Zugangsrichtung unmittelbar vor dem Zugang mit möglichst vielen Antennen abzudecken.

Die Antennen sind derart angeordnet, dass durch die RSSI -Auswertung der einer Zugangskontrollvorrichtung in Zugangsrichtung am nächsten befindliche Datenträger ermittelt wird. Vorzugsweise sind die Antennen in Zugangsrichtung unmittelbar vor dem Zugang seitlich angeordnet.

Gemäß einer weiteren Ausgestaltung der Erfindung kann die Auswertung derempfangenen Signalstärken der Beacons der Datenträger anhand des RSSI-Verlaufs der Beacons der Datenträger an der zumindest einen Antenne mittels eines neuronalen Netzwerks durchgeführt werden, um den einer Zugangskontrollvorrichtung in Zugangsrichtung am nächsten befindlichen Datenträger zu ermitteln.

Das neuronale Netzwerk wird hierbei mittels mehrerer Signalverläufe anhand von Testdaten angelernt. Zu diesem Zweck werden Signalverläufe vieler gültiger Durchgänge mit einer definierten Variabilität an Sendemodulen und Tragepositionen aufgezeichnet, wobei die aufgezeichneten Signalverläufe dazu verwendet werden, um beispielsweise ein RNN (Recurrent Neural Network) in Kombination mit einem LSTM (Long Short Term Memory) zu trainieren. Das trainierte Modell wird anschließend verwendet werden, um zukünftige Signalverläufe auszuwerten.

Bei der Auswertung der Signalstärken der empfangenen Beacons wird die Beacon-ID auch dazu verwendet, um zu erkennen, ob der die Beacons sendende Datenträger ein "aktives" und "gültiges" Gerät ist. Ist dies der Fall, so unterscheiden sich zeitlich aufeinanderfolgende Beacons eines Datenträgers durch die Beacon-ID. Wenn sich aufeinanderfolgende Beacons eines Datenträgers nicht hinsichtlich der Beacon-ID unterscheiden, so wird davon ausgegangen, dass eine unbefugte Person ein einziges Signal der Übertragung abgreift und dieses in einer Schleife wiedergibt.

Gemäß einer Weiterbildung und für den Fall, dass die zeitliche Reihenfolge der Werte der Beacon-IDs der von einem Datenträger gesendeten Beacons in der empfangenden Zugangskontrollvorrichtung bzw. im Zugangskontrollsystem gespeichert ist, beispielsweise wenn der Algorithmus zur Generierung der Beacon-IDs bekannt bzw. in der Zugangskontrollvorrichtung bzw. im Zugangskontrollsystem gespeichert ist, kann geprüft werden, ob die Beacon-IDs von zwei aufeinanderfolgenden Beacons eines Datenträgers der bekannten zeitlichen Reihenfolge der Werte der Beacon-IDs entsprechen. Ist dies nicht der Fall, so wird ein Missbrauch des Systems erkannt.

Die Erfindung wird anhand der beigefügten Figuren beispielhaft näher erläutert. Es zeigen:
Figur 1: Eine schematische Darstellung eines Datenträgers und einer Zugangskontrollvorrichtung aufweisend zwei Antennen zu Veranschaulichung einer Ausgestaltung des erfindungsgemäßen Verfahrens; und
Figur 2: Eine mögliche Anordnung der Antennen einer Zugangskontrollvorrichtung für Personen.

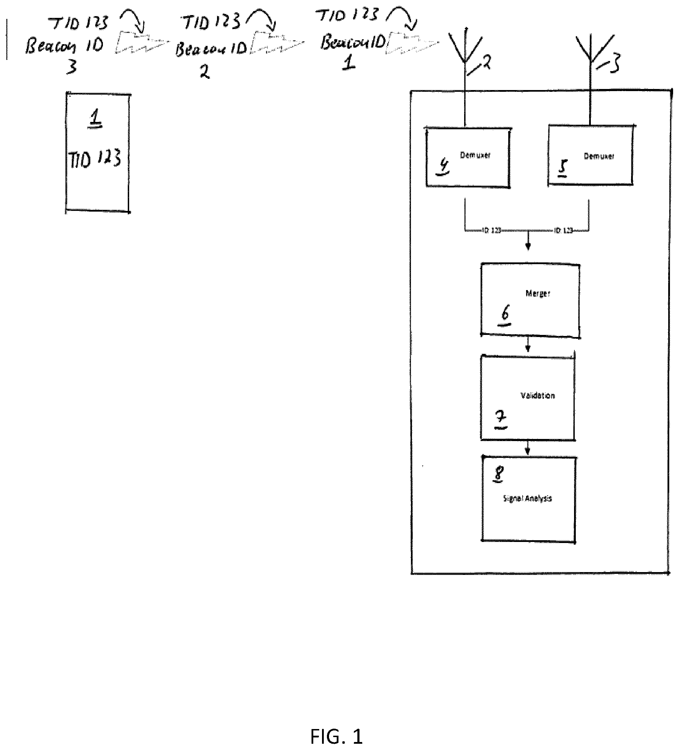

In Figur 1 ist mit 1 ein Datenträger bezeichnet, der als Transmitter ausgeführt ist, welcher Beacons enthaltend die eindeutige Kennung TID des Datenträgers 123 und jeweils eine für diesen Datenträger 1 eindeutige Beacon- ID sendet. In der Figur werden beispielhaft Beacons mit den Beacon-IDs 1, 2 und 3 dargestellt.

Die Beacons werden von den zwei Antennen 2, 3 einer Zugangskontrollvorrichtung empfangen, wobei anhand der eindeutigen Kennung der Datenträger Beacons von unterschiedlichen Datenträgern voneinander unterschieden werden können, was beispielsweise in den Beacon-Demuxern (Demultiplexern) 4, 5 erfolgt. Wenn mehrere Antennen wie im gezeigten Beispiel vorgesehen sind, wird die Beacon ID dazu verwendet, um die Signalstärke desselben Beacons an den verschiedenen Antennen miteinander vergleichen zu können, was beispielsweise mittels eines Beacon-Mergers 6 in Verbindung mit einer Validierungseinheit 7 und einer RSSI-Auswertungseinheit 8 erfolgen kann. Die zur Auswertung der Beacons erforderlichen Komponenten 4, 5, 6, 7, 8 die eine Signalauswerteeinheit bilden können, können in den Zugangskontrollvorrichtungen oder in einer mit einem Server verbundenen Einheit vorgesehen sein.

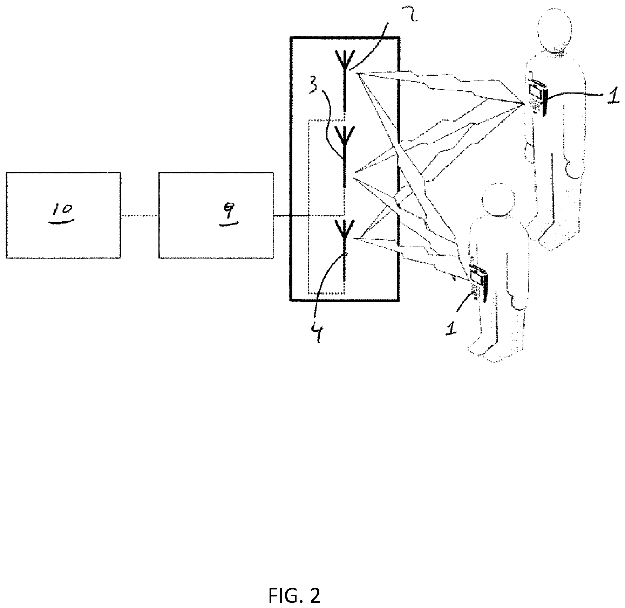

In Figur 2 wird beispielhaft eine Antennenanordnung für eine Zugangskontrollvorrichtung für Personen schematisch dargestellt. Bei dem gezeigten Beispiel sind drei Antennen 2, 3, 4 vorgesehen, welche an einer Seite der Zugangsspur des Zugangs in Zugangsrichtung unmittelbar vor dem Zugang angeordnet sind und den gesamten Bereich unmittelbar vor dem Zugang abdecken. Diese Anordnung ist besonders vorteilhaft bei erwarteter variabler Position der Datenträger 1, die beim gezeigten Beispiel als Mobiltelefone ausgeführt sind, wie es bei Personen der Fall ist. Gemäß weiterer Ausgestaltungen können auch an der gegenüberliegenden Seite Antennen vorgesehen sein, wobei die Gesamtanzahl der Antennen sowie die Höhe und Breite der Antennenarrays variieren kann. Die empfangenen Signale werden an eine Signalauswerteeinheit 9 übermittelt, wobei nach der Auswertung die Daten der Beacons des ermittelten der Zugangskontrollvorrichtung in Zugangsrichtung am nächsten befindlichen Datenträgers, insbesondere die in den Beacons dieses Datenträgers enthaltene ID, der eine Zugangsberechtigung zugeordnet ist, an eine Zugangsberechtigungs-Auswerteeinheit 10 übermittelt werden, die beispielsweise auf einem Server installiert sein kann, wobei bei gültiger Zugangsberechtigung, beispielsweise durch eine Steuerung eines Sperrorgans der Zugangskontrollvorrichtung Zugang gewährt wird. Wenn keine Sperrorgane vorgesehen sind und keine gültige Zugangsberechtigung vorliegt, kann ein optisches und/oder akustisches Signal ausgegeben werden.

Ein erfindungsgemäßes System zur Zugangskontrolle, insbesondere ein System zur Durchführung des erfindungsgemäßen Verfahrens umfasst demnach vorzugsweise zumindest eine Zugangskontrollvorrichtung, der jeweils ein Zugang zugeordnet ist, welche mit einem Server, auf dem eine Zugangsberechtigungs-Auswerteeinheit installiert ist, verbunden ist und zumindest eine Antenne aufweist, welche an einer Seite der Zugangsspur des Zugangs in Zugangsrichtung unmittelbar vor dem Zugang angeordnet ist und den gesamten Bereich unmittelbar vor dem Zugang abdeckt sowie Datenträger, welche geeignet sind, von der zumindest einen Antenne empfangbare Beacons nach dem ersten Standard zur drahtlosen Kommunikation, beispielsweise nach dem BLE Standard zu senden, enthaltend eine ID, der zumindest eine Zugangsberechtigung eindeutig zugeordnet ist, eine eindeutige Kennung des Datenträgers und jeweils eine für den jeweiligen den Beacon sendenden Datenträger eindeutige Beacon-ID, welche in Kombination mit der eindeutigen Kennung des Datenträgers eine eindeutige Identifikation eines jeden übertragenen Beacons von jedem Datenträger ermöglicht.

Die Beacons werden nach Empfang an eine in der Zugangskontrollvorrichtung oder im Server vorgesehene Signalauswerteeinheit übermittelt, in der eine RSSI-Auswertung durchgeführt wird, um den einer Zugangskontrollvorrichtung in Zugangsrichtung am nächsten befindlichen Datenträger zu ermitteln, wobei nach der RSSI-Auswertung die Daten der Beacons des ermittelten der Zugangskontrollvorrichtung in Zugangsrichtung am nächsten befindlichen Datenträgers, an die Zugangsberechtigungs-Auswerteeinheit zur Gültigkeitsauswertung übermittelt werden, wobei bei gültiger Zugangsberechtigung gemäß der Gültigkeitsauswertung Zugang gewährt wird.

## Patentansprüche

1. Verfahren zur Zugangskontrolle bei einem Zugangskontrollsystem für Personen oder Fahrzeuge umfassend zumindest eine Zugangskontrollvorrichtung, wobei jede Zugangskontrollvorrichtung jeweils zumindest eine Antenne (2, 3, 4) aufweist, wobei die Überprüfung einer Zugangsberechtigung anhand der Auswertung zumindest eines von einem Datenträger (1) über einen ersten Standard zur drahtlosen Kommunikation in einem Advertising Modus in regelmäßigen Abständen an eine Zugangskontrollvorrichtung gesendeten Beacons erfolgt, welches eine ID, der zumindest eine Zugangsberechtigung eindeutig zugeordnet ist und eine eindeutige Kennung (TID) des Datenträgers enthält, **dadurch gekennzeichnet, dass** die Beacons zusätzlich jeweils eine für den jeweiligen den Beacon sendenden Datenträger (1) eindeutige Beacon-ID enthalten, wobei durch die Kombination aus der eindeutigen Kennung des Datenträgers (1) und der für den Datenträger (1) eindeutigen Beacon-ID eine eindeutige Identifikation eines jeden übertragenen Beacons von jedem Datenträger (1) ermöglicht wird, wobei die Identifizierung und Lokalisierung der Datenträger (1) durch eine Auswertung der RSSIs der von den Datenträgern (1) gesendeten Beacons an der zumindest einen Antenne einer Zugangskontrollvorrichtung durchgeführt wird, wobei durch die eindeutige Identifikation eines jeden übertragenen Beacons von jedem Datenträger (1) durch die Kombination aus der eindeutigen Kennung des Datenträgers (1) und der für den Datenträger eindeutigen Beacon-ID gewährleistet wird, dass im Rahmen der RSSI- Auswertung die RSSI-Werte jeweils desselben Beacons eines Datenträgers (1) herangezogen werden, wobei durch die RSSI-Auswertung der einer Zugangskontrollvorrichtung in Zugangsrichtung am nächsten befindliche Datenträger (1) ermittelt wird und die von diesem Datenträger (1) gesendete ID, der zumindest eine Zugangsberechtigung eindeutig zugeordnet ist, ausgewertet wird, um bei gültiger Zugangsberechtigung Zugang zu gewähren und dass die eindeutige Beacon-ID mittels eines Algorithmus generiert wird, welcher auch in den empfangenden Zugangskontrollvorrichtungen bzw. im Zugangskontrollsystem gespeichert ist und zur Auswertung der Beacon-IDs herangezogen wird, wobei die zeitliche Reihenfolge der Werte der Beacon-IDs der von einem Datenträger gesendeten Beacons nach einem vorgegebenen Muster bzw. nach einer vorgegebenen Funktion bestimmt wird.

2. Verfahren zur Zugangskontrolle bei einem Zugangskontrollsystem für Personen oder Fahrzeuge nach Anspruch 1, **dadurch gekennzeichnet, dass** die Sendefunktion der Datenträger (1) in einem Advertising Modus aktiviert wird, wenn sich diese anhand der Auswertung eines GNSS -Signals eines GNSS-Empfängers der Datenträger (1) in einem vorgegebenen Bereich befinden oder in Reichweite eines von einer Zugangskontrollvorrichtung emittierten Aktivierungssignals nach einem zweiten Standard zur drahtlosen Kommunikation befinden und dieses empfangen, wobei die Sendefunktion deaktiviert wird, wenn anhand der Auswertung eines GNSS -Signals sich der Datenträger (1) außerhalb des vorgegebenen Bereichs befindet bzw. wenn sich der Datenträger (1) außerhalb der Reichweite des Aktivierungssignals befindet, wobei das Aktivierungssignal Informationen, die die Zugangskontrollvorrichtung, welche das Aktivierungssignal emittiert, eindeutig identifizieren enthält und wobei die von den Datenträgern (1) gesendeten Beacons zusätzlich diese Informationen enthalten.

3. Verfahren zur Zugangskontrolle bei einem Zugangskontrollsystem für Personen oder Fahrzeuge nach Anspruch 2, **dadurch gekennzeichnet, dass** die Aktivierung der Sendefunktion der Datenträger (1) in einem Advertising Modus durch eine auf dem Datenträger (1) installierte App gesteuert wird.

4. Verfahren zur Zugangskontrolle bei einem Zugangskontrollsystem für Personen oder Fahrzeuge nach Anspruch 2 oder 3, **dadurch gekennzeichnet, dass** der erste Standard zur drahtlosen Kommunikation dem zweiten Standard zur drahtlosen Kommunikation entspricht.

5. Verfahren zur Zugangskontrolle bei einem Zugangskontrollsystem für Personen oder Fahrzeuge nach Anspruch 1, 2, 3 oder 4, **dadurch gekennzeichnet, dass** der erste Standard zur drahtlosen Kommunikation ein BLE-, UWB- oder WLAN- Standard ist.

6. Verfahren zur Zugangskontrolle bei einem Zugangskontrollsystem für Personen oder Fahrzeuge nach Anspruch 5, **dadurch gekennzeichnet, dass** wenn der erste Standard zur drahtlosen Kommunikation ein BLE -Standard ist, wenn zusätzlicher Informationsfluss von der Zugangskontrollvorrichtung zu den Datenträgern (1) benötigt wird, dieser nach einem weiteren Standard zur drahtlosen Kommunikation erfolgt, wodurch die Notwendigkeit einer Umschaltung des Datenträgers (1) von einem Sende- zu einem Empfangsmodus für den BLE-Standard nach Empfang des Aktivierungssignals entfällt.

7. Verfahren zur Zugangskontrolle bei einem Zugangskontrollsystem für Personen oder Fahrzeuge nach einem der vorangehenden Ansprüche, **dadurch gekennzeichnet, dass** der Datenträger (1) als Mobiltelefon oder Smartwatch ausgeführt ist, wobei als eindeutige Kennung des Datenträgers (1) die IMEI-Nummer verwendet wird.

8. Verfahren zur Zugangskontrolle bei einem Zugangskontrollsystem für Personen oder Fahrzeuge nach einem der vorangehenden Ansprüche, **dadurch gekennzeichnet, dass** bei der Auswertung der empfangenen Signalstärken der Beacons der Datenträger (1) geprüft wird, ob bei einer Zugangskontrollvorrichtung mit einer einzelnen Antenne mindestens zwei unterschiedliche Beacons eines Datenträgers (1) in einem vorgegebenen Zeitintervall eine höhere Signalstärke als ein vorgegebener Schwellenwert aufweisen, wobei, wenn dies der Fall ist, der Datenträger (1) als der der Zugangskontrollvorrichtung in Zugangsrichtung am nächsten befindliche Datenträger (1) erkannt wird, wobei bei einer Zugangskontrollvorrichtung mit mehreren Antennen (2, 3, 4) geprüft wird, ob mindestens zwei unterschiedliche Beacons eines Datenträgers (1) in einem vorgegebenen Zeitintervall jeweils an zumindest zwei Antennen (2, 3, 4) eine höhere Signalstärke als ein vorgegebener erster Schwellenwert aufweisen oder ob an einer der Antennen (2, 3, 4) mindestens zwei unterschiedliche Beacons eines Datenträgers (1) in einem vorgegebenen Zeitintervall eine höhere Signalstärke als ein vorgegebener zweiter Schwellenwert aufweisen, wobei der zweite Schwellenwert höher als der erste Schwellenwert ist, wobei, wenn dies der Fall ist, der Datenträger (2, 3, 4) als der der Zugangskontrollvorrichtung in Zugangsrichtung am nächsten befindliche Datenträger (1) erkannt wird.

9. Verfahren zur Zugangskontrolle bei einem Zugangskontrollsystem für Personen oder Fahrzeuge nach einem der vorangehenden Ansprüche 1-7, **dadurch gekennzeichnet, dass** die Auswertung der empfangenen Signalstärken der Beacons der Datenträger (1) anhand des RSSI-Verlaufs der Beacons der Datenträger (1) an der zumindest einen Antenne (2, 3, 4) mittels eines neuronalen Netzwerks durchgeführt wird, um den einer Zugangskontrollvorrichtung in Zugangsrichtung am nächsten befindlichen Datenträger (1) zu ermitteln, wobei das neuronale Netzwerk mittels mehrerer Signalverläufe anhand von Testdaten angelernt wird, wobei Signalverläufe vieler gültiger Durchgänge mit einer definierten Variabilität an Sendemodulen der Datenträger (1) und Tragepositionen aufgezeichnet werden, wobei die aufgezeichneten Signalverläufe dazu verwendet werden, um ein RNN (Recurrent Neural Network) in Kombination mit einem LSTM (Long Short Term Memory) zu trainieren.

10. Verfahren zur Zugangskontrolle bei einem Zugangskontrollsystem für Personen oder Fahrzeuge nach einem der vorangehenden Ansprüche, **dadurch gekennzeichnet, dass** die Beacon-ID zusätzlich herangezogen wird, um zu erkennen, ob der die Beacons sendende Datenträger (1) ein aktives und gültiges Gerät ist, was der Fall ist, wenn sich zeitlich aufeinanderfolgende Beacons eines Datenträgers (1) durch die Beacon-ID unterscheiden, wobei wenn sich aufeinanderfolgende Beacons eines Datenträgers nicht hinsichtlich der Beacon-ID unterscheiden, davon ausgegangen wird, dass eine unbefugte Person ein einziges Signal der Übertragung abgreift und dieses in einer Schleife wiedergibt.

11. Verfahren zur Zugangskontrolle bei einem Zugangskontrollsystem für Personen oder Fahrzeuge nach einem der vorangehenden Ansprüche, **dadurch gekennzeichnet, dass** bei der RSSI-Auswertung Korrekturwerte verwendet werden, welche für jeden Datenträgertyp unterschiedlich sein können, um die unterschiedlichen Sendeleistungen der Sendemodule des ersten Standards zur drahtlosen Kommunikation unterschiedlicher Datenträgertypen zu kompensieren.

12. Verfahren zur Zugangskontrolle bei einem Zugangskontrollsystem für Personen oder Fahrzeuge nach Anspruch 11, **dadurch gekennzeichnet, dass** der datenträgertypbezogene Korrekturwert mit den Beacons eines Datenträgers (1) an die Zugangskontrollvorrichtung übermittelt wird, wobei er in der RSSI-Auswertung berücksichtigt wird.

13. Verfahren zur Zugangskontrolle bei einem Zugangskontrollsystem für Personen oder Fahrzeuge nach Anspruch 11, **dadurch gekennzeichnet, dass** in der Zugangskontrollvorrichtung oder in einem Server eine Lookup Tabelle abgelegt ist, welche die Korrekturwerte für unterschiedliche Datenträgertypen beinhaltet, wobei basierend auf der mittels der Beacons übermittelten eindeutigen Kennung der Datenträger (1) ein entsprechender Korrekturwert ausgewählt und zur RSSI-Auswertung herangezogen wird.

14. System zur Durchführung des Verfahrens nach einem der vorangehenden Ansprüche, umfassend zumindest eine Zugangskontrollvorrichtung und einen Server, wobei der Zugangskontrollvorrichtung jeweils ein Zugang zugeordnet ist, welche mit dem Server, auf dem eine Zugangsberechtigungs-Auswerteeinheit (10) installiert ist, verbunden ist und zumindest eine Antenne (2, 3, 4) aufweist, welche an einer Seite der Zugangsspur des Zugangs in Zugangsrichtung unmittelbar vor dem Zugang angeordnet ist und den gesamten Bereich unmittelbar vor dem Zugang abdeckt sowie Datenträger (1), welche eingerichtet sind, von der zumindest einen Antenne (2, 3, 4) empfangbare Beacons nach dem ersten Standard zur drahtlosen Kommunikation zu senden, enthaltend eine ID, der zumindest eine Zugangsberechtigung eindeutig zugeordnet ist, eine eindeutige Kennung des Datenträgers und jeweils eine für den jeweiligen den Beacon sendenden Datenträger eindeutige Beacon-ID, welche in Kombination mit der eindeutigen Kennung des Datenträgers eine eindeutige Identifikation eines jeden übertragenen Beacons von jedem Datenträger ermöglicht, wobei die Beacons nach Empfang an eine in der Zugangskontrollvorrichtung oder im Server vorgesehene Signalauswerteeinheit übermittelbar sind, in der eine RSSI-Auswertung durchführbar ist, um den einer Zugangskontrollvorrichtung in Zugangsrichtung am nächsten befindlichen Datenträger (1) zu ermitteln, wobei nach der RSSI-Auswertung die Daten der Beacons des ermittelten der Zugangskontrollvorrichtung in Zugangsrichtung am nächsten befindlichen Datenträgers (1) an die Zugangsberechtigungs-Auswerteeinheit zur Gültigkeitsauswertung übermittelbar sind, wobei bei gültiger Zugangsberechtigung gemäß der Gültigkeitsauswertung Zugang gewährt wird.

## Claims

1. A method for access control in an access control system for people or vehicles comprising at least one access control device, each access control device having at least one antenna (2, 3, 4) in each case, the checking of access authorization taking place on the basis of the evaluation of at least one beacon, which is sent from a data carrier (1) by means of a first standard for wireless communication in an advertising mode at regular intervals to an access control device, which beacon contains an ID, to which at least one access authorization is uniquely assigned, and a unique identifier (TID) of the data carrier, **characterized in that** the beacons additionally in each case contain a unique beacon ID for the respective data carrier (1) sending the beacon, wherein due to the combination of the unique identifier of the data carrier (1) and the beacon ID, which is unique for the data carrier (1), unique identification of every beacon transmitted by each data carrier (1) is enabled, wherein the identification and localization of the data carriers (1) is carried out at the at least one antenna of an access control device by means of an evaluation of the RSSIs of the beacons sent from the data carriers (1), wherein due to the unique identification of every beacon transmitted from each data carrier (1) by means of the combination of the unique identifier of the data carrier (1) and the beacon ID, which is unique for the data carrier, it is ensured that the RSSI values of the same beacon of a data carrier (1) are called upon in each case in the context of the RSSI evaluation, wherein due to the RSSI evaluation, the data carrier (1) closest to an access control device in the access direction is determined and the ID sent from this data carrier (1), to which at least one access authorization is uniquely assigned, is evaluated in order to grant access in the case of valid access authorization, and **in that** the unique beacon ID is generated by means of an algorithm which is also stored in the receiving access control devices or in the access control system and is called upon for evaluating the beacon IDs, wherein the temporal sequence of the values of the beacon IDs of the beacons sent from a data carrier is determined according to a predetermined pattern or according to a predetermined function.

2. The method for access control in an access control system for people or vehicles according to Claim 1, **characterized in that** the send function of the data carriers (1) is activated in an advertising mode if, on the basis of the evaluation of a GNSS signal of a GNSS receiver of the data carriers (1), the data carriers are located in a predetermined area or are located in range of an activation signal emitted by an access control device according to a second standard for wireless communication and receive this activation signal, wherein the send function is deactivated if, on the basis of the evaluation of a GNSS signal, the data carrier (1) is located outside of the predetermined area or if the data carrier (1) is located outside the range of the activation signal, wherein the activation signal contains information which uniquely identifies the access control device which emits the activation signal and wherein the beacons sent from the data carriers (1) additionally contain this information.

3. The method for access control in an access control system for people or vehicles according to Claim 2, **characterized in that** the activation of the send function of the data carriers (1) is controlled in an advertising mode by an app which is installed on the data carrier (1).

4. The method for access control in an access control system for people or vehicles according to Claim 2 or 3, **characterized in that** the first standard for wireless communication corresponds to the second standard for wireless communication.

5. The method for access control in an access control system for people or vehicles according to Claim 1, 2, 3 or 4, **characterized in that** the first standard for wireless communication is a BLE, UWB or WLAN standard.

6. The method for access control in an access control system for people or vehicles according to Claim 5, **characterized in that** if the first standard for wireless communication is a BLE standard, if additional information flow is required from the access control device to the data carriers (1), this takes place according to a further standard for wireless communication, as a result of which the necessity for the data carrier (1) to switch from a send mode to a receive mode for the BLE standard after receiving the activation signal does not apply.

7. The method for access control in an access control system for people or vehicles according to one of the preceding claims, **characterized in that** the data carrier (1) is realized as a mobile telephone or smartwatch, wherein the IMEI number is used as unique identifier of the data carrier (1).

8. The method for access control in an access control system for people or vehicles according to one of the preceding claims, **characterized in that** in the evaluation of the received signal strengths of the beacons of the data carrier (1), a check is made as to whether, in the case of an access control device having one single antenna, at least two different beacons of a data carriers (1) in a predetermined time interval have a higher signal strength than a predetermined threshold value, wherein if this is the case, the data carrier (1) is recognized as the closest data carrier (1) to the access control device in the access direction, wherein in the case of an access control device having a plurality of antennas (2, 3, 4), a check is made as to whether at least two different beacons of a data carrier (1) in a predetermined time interval in each case have a higher signal strength at in each case at least two antennas (2, 3, 4) than a predetermined first threshold value or whether at one of the antennas (2, 3, 4) at least two different beacons of a data carrier (1) in a predetermined time interval have a higher signal strength than a predetermined second threshold value, wherein the second threshold value is higher than the first threshold value, wherein if this is the case, the data carrier (1) is recognized as the closest data carrier (1) to the access control device in the access direction.

9. The method for access control in an access control system for people or vehicles according to one of the preceding Claims 1-7, **characterized in that** the evaluation of the received signal strengths of the beacons of the data carriers (1) is carried out by means of a neural network on the basis of the RSSI curve of the beacons of the data carriers (1) at the at least one antenna (2, 3, 4) in order to determine the closest data carrier (1) to an access control device in the access direction, wherein the neural network is trained by means of a plurality of signal curves based on test data, wherein signal curves of many valid passes with a defined variability are recorded at send modules of the data carriers (1) and carrying positions, wherein the recorded signal curves are used to train an RNN (recurrent neural network) in combination with an LSTM (long short term memory).

10. The method for access control in an access control system for people or vehicles according to one of the preceding claims, **characterized in that** the beacon ID is additionally called upon in order to detect whether the data carrier (1) sending the beacons is an active and valid device, which is the case if temporally successive beacons of a data carrier (1) differ by means of the beacon ID, wherein if successive beacons of a data carrier do not differ with regards to the beacon ID, it is assumed that an unauthorized person is tapping a single signal of the transmission and reproducing this signal in a loop.

11. The method for access control in an access control system for people or vehicles according to one of the preceding claims, **characterized in that** correction values are used in the RSSI evaluation, which correction values may be different for each data carrier type, in order to compensate for the different transmitting powers of the send modules of the first standard for wireless communication of different data carrier types.

12. The method for access control in an access control system for people or vehicles according to Claim 11, **characterized in that** the correction value, which relates to the data carrier type, is transmitted with the beacon of a data carrier (1) to the access control device, wherein it is taken into account in the RSSI evaluation.

13. The method for access control in an access control system for people or vehicles according to Claim 11, **characterized in that** a lookup table which contains the correction values for different data carrier types is stored in the access control device or in a server, wherein on the basis of the unique identifier of the data carriers (1) transmitted by means of the beacon a corresponding correction value is selected and called upon for RSSI evaluation.

14. A system for carrying out the method according to one of the preceding claims, comprising at least one access control device and one server, one entrance being associated with the access control device in each case, which access control device is connected to the server, on which an access authorization evaluation unit (10) is installed, and has at least one antenna (2, 3, 4) which is arranged on one side of the access lane of the entrance in the access direction directly in front of the entrance and covers the entire area directly in front of the entrance and data carriers (1), which are set up to send beacons, which can be received by the at least one antenna (2, 3, 4), according to the first standard for wireless communication, containing an ID, to which at least one access authorization is uniquely assigned, a unique identifier of the data carrier and in each case a beacon ID, which is unique for the respective data carrier sending the beacon and which in combination with the unique identifier of the data carrier enables a unique identification of every beacon transmitted from each data carrier, it being possible to transmit the beacons, after receipt, to a signal evaluation unit which is provided in the access control device or in the server and in which an RSSI evaluation can be carried out in order to determine the data carrier (1) to an access control device in the access direction, it being possible, after the RSSI evaluation, to transmit the data of the beacons of the data carrier (1) determined as closest to the access control device in the access direction to the access authorization evaluation unit for evaluation of validity, access being granted in the case of valid access authorization according to the evaluation of validity.

## Revendications

1. Procédé de contrôle d'accès dans un système de contrôle d'accès pour personnes ou véhicules, comprenant au moins un dispositif de contrôle d'accès, sachant que chaque dispositif de contrôle d'accès comporte respectivement au moins une antenne (2, 3, 4), sachant que le contrôle d'une autorisation d'accès a lieu à l'aide de l'évaluation d'au moins un signal de balise envoyé par un support de données (1) via un premier standard de communication sans fil dans un Mode d'Annonce à des intervalles réguliers à un dispositif de contrôle d'accès, laquelle contient un identifiant (ID), qui est rigoureusement attribué à une autorisation d'accès et une identification précise (Identifiant de terminal - TID) du support de données, **caractérisé en ce que** les signaux de balise contiennent en plus respectivement un ID de signal de balise précis pour le support de données (1) respectif envoyant le signal de balise, sachant que par la combinaison de l'identification précise du support de données (1) et de l'ID de signal de balise précis pour le support de données (1) une identification précise de chaque signal de balise transmis est permise par chaque support de données (1), sachant que l'identification et la localisation des supports de données (1) sont effectuées par une évaluation des Indicateurs de Niveau du Signal Reçu (RSSI) des signaux de balises envoyés par le support de données à au moins une antenne d'un dispositif de contrôle d'accès, sachant que par l'identification précise de chaque signal de balise transmis par chaque support de données (1), il est garanti par la combinaison de l'identification précise du support de données (1) et de l'identifiant de signal de balise précis pour le support de données, que dans le cadre de l'évaluation RSSI, les valeurs RSSI respectivement de la même balise d'un support de données (1) sont prises en compte, sachant que par l'évaluation RSSI, le support de données (1) se trouvant proche d'un dispositif de contrôle d'accès en direction de l'accès est déterminé et l'ID envoyé par ce support de données (1) auquel est attribuée précisément au moins une autorisation d'accès, est évalué pour garantir un accès en cas d'autorisation d'accès valable et que l'ID de signal de balise précis est généré au moyen d'un algorithme, lequel est également mémorisé dans les dispositifs de contrôle d'accès et dans le système de contrôle d'accès recevant et est pris en compte pour l'évaluation des ID de signaux de balise, sachant que l'ordre chronologique des valeurs des ID de signal de balise des signaux de balise envoyés par un support de données est déterminé selon un modèle prédéfini ou selon une fonction prédéfinie.

2. Procédé de contrôle d'accès dans un système de contrôle d'accès pour personnes ou véhicules selon la revendication 1, **caractérisé en ce que** la fonction d'émission des supports de données (1) est activée dans un Mode d'Annonce, lorsque ceux-ci se trouvent dans une zone prédéfinie à l'aide de l'évaluation d'un signal GNSS d'un récepteur GNSS des supports de données (1) ou se trouvent à portée d'un signal d'activation émis par un dispositif de contrôle d'accès selon un deuxième standard pour la communication sans fil et reçoivent celui-ci, sachant que la fonction d'émission est désactivée, lorsque le support de données (1) se trouve en dehors de la zone prédéfinie à l'aide de l'évaluation d'un signal GNSS ou lorsque le support de données (1) se trouve hors de portée du signal d'activation, sachant que le signal d'activation contient des informations, qui identifient précisément le dispositif de contrôle d'accès, qui émet le signal d'activation et sachant que les signaux de balise envoyés par les supports de données (1) contiennent en plus ces informations.

3. Procédé de contrôle d'accès dans un système de contrôle d'accès pour personnes ou véhicules selon la revendication 2, **caractérisé en ce que** l'activation de la fonction d'émission des supports de données (1) est pilotée dans un Mode d'Annonce par une Application installée sur le support de données (1).

4. Procédé de contrôle d'accès dans un système de contrôle d'accès pour personnes ou véhicules selon la revendication 2 ou 3, **caractérisé en ce que** le premier standard de communication sans fil correspond au deuxième standard de communication sans fil.

5. Procédé de contrôle d'accès dans un système de contrôle d'accès pour personnes ou véhicules selon la revendication 1, 2, 3 ou 4, **caractérisé en ce que** le premier standard de communication sans fil est un standard Bluetooth de faible énergie (BLE), un standard à Bande ultralarge (UWB) ou un standard à Réseau Local sans Fil (WLAN).

6. Procédé de contrôle d'accès dans un système de contrôle d'accès pour personnes ou véhicules selon la revendication 5, **caractérisé en ce que** le premier standard de communication sans fil est un standard Bluetooth de faible énergie (BLE), lorsqu'un flux d'informations supplémentaire du dispositif de contrôle d'accès aux supports de données (1) est nécessaire, celui-ci a lieu selon un autre standard de communication sans fil, une permutation du support de données (1) d'un mode émission en un mode réception pour le standard BLE n'est de ce fait plus nécessaire après réception du signal d'activation.

7. Procédé de contrôle d'accès dans un système de contrôle d'accès pour personnes ou véhicules selon l'une quelconque des revendications précédentes, **caractérisé en ce que** le support de données (1) est exécuté sous la forme d'un téléphone mobile ou d'une montre connectée, sachant que le numéro d'identité d'équipement mobile international (IMEI) est utilisé en tant qu'identification précise du support de données (1).

8. Procédé de contrôle d'accès dans un système de contrôle d'accès pour personnes ou véhicules selon l'une quelconque des revendications précédentes, **caractérisé en ce que** lors de l'évaluation des intensités de signaux reçues des signaux de balises, le support de données (1) est contrôlé pour voir si pour un dispositif de contrôle d'accès avec une antenne individuelle au moins deux signaux de balise différents d'un support de données (1) comportent dans un intervalle de temps prédéfini une intensité de signaux plus élevée qu'une valeur seuil prédéfinie, sachant que, lorsque ceci est le cas, le support de données (1) est identifié comme le support de données (1) se trouvant le plus proche du dispositif de contrôle d'accès dans la direction d'accès, sachant que pour un dispositif de contrôle d'accès avec plusieurs antennes (2, 3, 4) il est vérifié, si au moins deux signaux de balise différents d'un support de données (1) comportent respectivement dans un intervalle de temps prédéfini sur au moins deux antennes (2, 3, 4) une intensité de signaux plus élevée qu'une première valeur seuil prédéfinie ou si sur une des antennes (2, 3, 4) au moins deux signaux de balise différents d'un support de données (1) comportent dans un intervalle de temps prédéfini une intensité de signaux plus élevée qu'une deuxième valeur seuil prédéfinie, sachant que la deuxième valeur seuil est plus élevée que la première valeur seuil, sachant que, lorsque cela est le cas, le support de données (1) est identifié comme le support de données (1) se trouvant le plus proche du dispositif de contrôle d'accès en direction d'accès.

9. Procédé de contrôle d'accès pour un système de contrôle d'accès pour des personnes ou des véhicules selon l'une quelconque des revendications précédentes 1-7, **caractérisé en ce que** l'évaluation des intensités des signaux reçues des signaux de balise des supports de données (1) est effectuée à l'aide du profil RSSI des signaux de balises des supports de données (1) sur au moins une antenne (2, 3, 4) au moyen d'un réseau neuronal pour déterminer le support de données (1) se trouvant le plus proche d'un dispositif de contrôle d'accès en direction d'accès, sachant que le réseau neuronal est formé au moyen de plusieurs profils de signaux à l'aide de données d'essai, sachant que les profils de signaux de nombreux passages valables sont enregistrés avec une variabilité définie sur des modules d'émission des supports de données (1) et des positions de support, sachant que les profils de signaux enregistrés sont utilisés pour former un Réseau Neuronal Récurrent (RNR) en combinaison avec une Mémoire longue à court terme (LSTM).

10. Procédé de contrôle d'accès pour un système de contrôle d'accès pour des personnes ou des véhicules selon l'une quelconque des revendications précédentes, **caractérisé en ce que** l'ID de signal de balise est pris en plus en compte pour identifier si le support de données (1) émettant les signaux de balise est un appareil actif et valable, ce qui est le cas, lorsque les signaux de balise chronologiquement successifs d'un support de données (1) sont différenciés par les ID de signaux de balise, sachant que lorsque les signaux de balise successifs d'un support de données ne se différencient pas eu égard aux ID de signaux de balise, il est supposé qu'une personne non autorisée capte un signal unique de la transmission et restitue celui-ci dans une boucle.

11. Procédé de contrôle d'accès pour un système de contrôle d'accès pour des personnes ou des véhicules selon l'une quelconque des revendications précédentes, **caractérisé en ce que** des valeurs de correction sont utilisées lors de l'évaluation RSSI, lesquelles peuvent être différentes pour chaque type de support de données pour compenser les puissances d'émission différentes des modules d'émission du premier standard de communication sans fil des types de support de données différents.

12. Procédé de contrôle d'accès dans un système de contrôle d'accès pour des personnes ou véhicules selon la revendication 11, **caractérisé en ce que** la valeur de correction se référant au type de support de données est transmise avec les signaux de balise d'un support de données (1) au dispositif de contrôle d'accès, sachant qu'elle est prise en considération dans l'évaluation RSSI.

13. Procédé de contrôle d'accès dans un système de contrôle d'accès pour des personnes ou véhicules selon la revendication 11, **caractérisé en ce qu'**une Table de correspondance est déposée dans le dispositif de contrôle d'accès ou dans un serveur, laquelle contient les valeurs de correction pour différents types de support de données, sachant qu'en se basant sur l'identification précise des supports de données (1) transmise au moyen des signaux de balises, une valeur de correction correspondante est sélectionnée et est prise en compte pour l'évaluation RSSI.

14. Système de mise en œuvre du procédé selon l'une quelconque des revendications précédentes comprenant au moins un dispositif de contrôle d'accès et un serveur, sachant qu'un accès est respectivement attribué au dispositif de contrôle d'accès, lequel est relié au serveur sur lequel est installée une unité d'évaluation d'autorisation d'accès (10) et comporte au moins une antenne (2, 3, 4), laquelle est disposée directement avant l'accès sur un côté de la voie d'accès de l'accès dans la direction d'accès et couvre directement toute la zone avant l'accès, ainsi que des supports de données (1), lesquels sont agencés pour envoyer des signaux de balise recevables par au moins une antenne (2, 3, 4) selon le premier standard de communication sans fil, contenant un ID, auquel est attribuée précisément au moins une autorisation d'accès, une identification précise du support de données et respectivement un ID de signaux de balise précis pour le support de données respectif envoyant la balise, lequel en combinaison avec l'identification précise du support de données permet une identification précise de chaque signal de balise transmis par chaque support de données, sachant que les signaux de balise peuvent être transmis après réception à une unité d'évaluation de signaux prévue dans le dispositif de contrôle d'accès ou dans le serveur dans lequel une évaluation RSSI peut être effectuée pour déterminer le support de données (1) se trouvant le plus proche d'un dispositif de contrôle d'accès dans la direction d'accès, sachant qu'après l'évaluation RSSI, les données des signaux de balise du support de données (1) déterminé se trouvant le plus proche du dispositif de contrôle d'accès dans la direction d'accès peuvent être transmises à l'unité d'évaluation d'autorisation d'accès pour évaluation de validité, sachant que l'accès est garanti en cas d'autorisation d'accès valable conformément à l'évaluation de validité.
